# FASCICULE DE BREVET EUROPEEN

(11) **EP 0 599 690 B1**
(45) Date de publication et mention de la délivrance du brevet: **06.05.1999**
(21) Numéro de dépôt: 93402771.5
(22) Date de dépôt: 16.11.1993
(51) Int. Cl.: B01J 20/28, B01D 53/28

(54) **Matières déshydratantes à base de polymères**
Entwässerungsmaterien auf Polymerenbasis
Polymers based dehydrating materials

(30) Priorité: 20.11.1992 FR 9213947
(43) Date de publication de la demande: 01.06.1994
(73) Titulaire: AIRSEC S.A., 94600 Choisy Le Roi (FR)
(72) Inventeur: Lancesseur, Didier, F-94600 Choisy-Le-Roi (FR)
(74) Mandataire: Gaucherand, Michel

(56) Documents cités:
- EP-A- 0 400 460
- EP-A- 0 432 438
- DE-A- 2 614 236
- DE-A- 2 721 511
- FR-A- 2 379 691
- US-A- 4 061 807

## Description

La présente invention concerne le domaine des matières plastiques chargées à capacités d'absorption d'humidité élevées, susceptibles de constituer des structures solides, substantiellement continues, de formes variées telles que plaques ou cylindres creux, aux températures ambiantes, et pouvant être transformées notamment par injection, thermoformage, soufflage.

Des matières présentant ces caractéristiques peuvent être recherchées dans de nombreuses applications ; conditionnement de produits sensibles à l'humidité, notamment de produits pharmaceutiques ou alimentaires, technologie des semi-conducteurs, et en général toutes applications mettant en oeuvre des espaces confinés dans lesquels un faible taux d'hygrométrie est requis pendant une durée courte à moyenne.

A cette fin, il est connu de mettre en oeuvre, des structures composites constituées successivement, de l'intérieur vers l'extérieur,
1) d'une couche poreuse laissant passer l'humidité,
2) d'une couche absorbant l'humidité, et
3) d'une couche étanche.

Cependant, la réalisation de ces composites multicouches met en oeuvre des procédés et des dispositifs complexes, que la présente invention permet de simplifier au moyen de matières plastiques susceptibles de remplacer, en une seule couche, les couches 1) et 2) précédemment citées.

On connaît d'après le EP-A- 0 432 438 des compositions comprenant : de 1 à 33,3 % de polymère, de 66,6 à 99 % d'agent de déshydratation et des fibres de renforcement. Pour obtenir des articles, ces compositions sont d'abord malaxées, puis ensuite moulées par compression avec chauffage.

On connaît d'après le EP-A- 0 400 460 des compositions comprenant : de 20 à 95,2 % de polymères et de 4,8 à 80 % d'agents de déshydratation. Ces compositions sont mélangées dans un malaxeur avec chauffage puis moulées. De la manière sous laquelle ces compositions sont mise en forme, il semblerait qu'elles ne puissent pas, ou présentent de grandes difficultés à être extrudées.

Le but de l'invention est de pallier les inconvénients des compositions de l'art antérieur en proposant de nouvelles compositions thermoplastiques qui permettent d'obtenir des matériaux polymères, à haute capacité d'absorption d'humidité, et pouvant être facilement extrudées.

Des compositions polymères déshydratantes à capacités d'absorption d'humidité élevées, comprennent un ou plusieurs polymères et un ou plusieurs agents de déshydratation.

Suivant l'invention, ces compositions sont caractérisées en ce qu'elles comprennent notamment :
- de 50 à 80 % en poids d'un ou de plusieurs polymères compatibles thermoplastiques,
- de 20 à 50 % en poids d'un ou plusieurs agents de déshydratation,
- de 2 à 8 % en poids d'un ou plusieurs élastomères, et
- de 1 à 4 % en poids de fibres synthétiques et/ou végétales et/ou animales de longueurs comprises entre 0,5 et 4 mm.

A efficacité équivalente, les compositions selon l'invention permettent de s'affranchir des difficultés d'assemblage de la couche poreuse et de la couche absorbante d'humidité mentionnées ci-dessus.

Bien que tous polymères thermoplastiques puissent être mis en oeuvre dans le cadre de l'invention, on préfère particulièrement les polystyrènes, les polyoléfines (polyéthylène, polypropylène), les polyamides, le polychlorure de vinyle, les polyuréthanes seuls ou associés.

Les agents de déshydratation préférés sont les gels de silice et les tamis moléculaires.

Au contraire, aucun élastomère particulier n'est préféré. On pourra ainsi utiliser des caoutchoucs styrène-butadiène (SBR), des copolymères styrène-éthylène-butylène-styrène (SEBS), des butylcaoutchoucs, des caoutchoucs d'éthylène-propylène (EPR), des caoutchoucs éthylène-propylène-diène (EPDM), des copolymères éthylène-acétate de vinyle (EVA), éthylène-acrylate ou acrylonitrile-butadiène, des polynorbornènes, ou encore des polyisoprènes, polychloroprènes ou polybutadiènes.

A titre d'exemple de fibres, on citera les fibres acryliques, polyesters, polyamides (synthétiques), ou naturelles, animales telles que la laine ou la soie, ou végétales telles que le coton ou le lin.

Les compositions selon l'invention contiennent en outre, le cas échéant, des quantités efficaces de tous additifs minéraux ou organiques usuels dans le domaine des matières plastiques, notamment de plastifiants, stabilisants, colorants et pigments.

Un second objet de l'invention consiste en un procédé de préparation de matériaux polymères déshydratants à capacités d'absorption d'humidité élevées, dans lequel on réalise un mélange comprenant un ou plusieurs polymères et un ou plusieurs agents de déshydratation.

Le procédé est caractérisé en ce que l'on réalise notamment dans un premier temps un mélange homogène comprenant :
- de 50 à 80 % en poids d'un ou de plusieurs polymères compatibles thermoplastiques,
- de 20 à 50 % en poids d'un ou plusieurs agents de déshydratation,
- de 2 à 8 % en poids d'un ou plusieurs élastomères, et
- de 1 à 4 % en poids de fibres synthétiques et/ou végétales et/ou animales de longueurs comprises entre 0,5 et 4 mm,
   puis on transforme la matière obtenue par extrusion.

La transformation est effectuée de préférence dans une extrudeuse à double vis co-rotative.

L'invention a également pour objet les emballages ou contenants dont la surface intérieure est constituée de matières plastiques de compositions selon l'invention.

L'exemple suivant illustre l'invention.

### EXEMPLE

On effectue six mélange de compositions consignées dans le tableau 1 ci-dessous, les quantités étant exprimées en pourcentages pondéraux.

**TABLEAU 1**

| Composition | 1 | 2 | 3 | 4 | 5 | 6 |
|---|---|---|---|---|---|---|
| PS | 65 | 65 | 65 | 65 | 60 | 60 |
| SEBS | 4 | 4 | 4 | 4 | 4 | 4 |
| poussière de gel | 30 | | | 15 | 15 | 30 |
| poussière de tamis | | 30 | | 15 | 15 | |
| tamis moléculaire | | | 30 | | | |
| lithopone | | | | | 5 | 5 |
| fibres de coton | 1 | 1 | 1 | 1 | 1 | 1 |
| - PS : polystyrène - SEBS : copolymère blocs styrène-(éthylène-butylène)-styrène linéaire - poussière de gel : gel de silice en poudre fine - (poussière de) tamis : tamis moléculaire (particules de dimensions n'excédant pas 20 µm - fibres de coton : longueurs maximales de 2 mm. | | | | | | |

Une plaque de 3 mm d'épaisseur est réalisée avec la composition n°6 du tableau 1, puis abandonnée en atmosphère à 80% d'humidité résiduelle, pendant une durée d, en fonction de laquelle on mesure la reprise d'humidité (absorption d'humidité, en % en poids de la plaque). Les résultats sont consignés dans le tableau 2 ci-dessous.

**TABLEAU 2**

| d | reprise d'humidité (%) |
|---|---|
| 24 h | 1,65 |
| 48 h | 2,45 |
| 5 j. | 3,75 |
| 7 j. | 4,30 |
| 9 j. | 4,75 |

Les compositions selon l'invention sont remarquables pour leurs capacités d'absorption élevées vis-a-vis de l'humidité, mis aussi d'une manière plus inattendue, des odeurs.

## Revendications

1. Compositions polymères déshydratantes, à capacités d'absorption d'humidité élevées, comprenant un ou plusieurs polymères et un ou plusieurs agents de déshydratation, caractérisées en ce qu'elles comprennent notamment :
A) de 50 à 80 % en poids d'un ou de plusieurs polymères compatibles thermoplastiques,
B) de 20 à 50 % en poids d'un ou plusieurs agents de déshydratation,
C) de 2 à 8 % en poids d'un ou plusieurs élastomères, et
D) de 1 à 4 % en poids de fibres synthétiques et/ou végétales et/ou animales de longueurs comprises entre 0,5 et 4 mm.

2. Compositions selon la revendication 1, caractérisées en ce que l'on choisi les polymères compatibles thermoplastiques A) dans le groupe des polystyrènes, polyoléfines, polyamides, polychlorures de vinyle, polyuréthanes, seuls ou associés.

3. Compositions selon la revendication 1 ou 2, caractérisées en ce que l'on choisi les agents de déshydratation B) dans le groupe des gels de silice, tamis moléculaires, seuls ou associés.

4. Compositions selon la revendication 3, caractérisées en ce que les gels de silice se présentent sous la forme d'une poudre fine.

5. Compositions selon la revendication 3, caractérisées en ce que les tamis moléculaires se présentent sous la forme d'une poudre dont les particules ont une dimension inférieure ou égale à 20 µm.

6. Compositions selon l'une des revendications précédentes, caractérisées en ce que l'on choisi les élastomères C) dans le groupe des caoutchoucs styrène-butadiène, styrène-éthylène-butylène-styrène, butyl-caoutchoucs, caoutchoucs d'éthylène-propylène, caoutchoucs d'éthylène-propylène-diène, éthylène-acétate de vinyle, éthylène-acrylate, acrylonitrile-butadiène, polynorbornènes, polyisoprènes, polychloroprènes, polybutadiènes, seuls ou associés.

7. Compositions selon l'une des revendications précédentes, caractérisées en ce que l'on choisi les fibres D) synthétiques dans le groupe des fibres acryliques, fibres polyesters, fibres polyamides, seules ou associées.

8. Compositions selon l'une des revendications précédentes, caractérisées en ce que l'on choisi les fibres D) animales dans le groupe des fibres de laine, fibres de soie, seules ou associées.

9. Compositions selon l'une des revendications précédentes, caractérisées en ce que l'on choisi les fibres D végétales dans le groupe des fibres de coton, fibres de lin, seules ou associées.

10. Compositions selon la revendication 9, caractérisées en ce que les fibres de coton ont une longueur inférieure ou égale à 2 mm.

11. Compositions selon l'une des revendications précédentes, caractérisées en ce qu'elles comprennent en outre des additifs minéraux ou organiques jouant le rôle de plastifiants, de stabilisants, de colorants, de pigments.

12. Compositions selon la revendication 11, caractérisées en ce qu'elles comprennent comme colorant du lithopone.

13. Procédé de préparation de matériaux polymères déshydratants à capacités d'absorption d'humidité élevées, dans lequel on réalise un mélange comprenant un ou plusieurs polymères et un ou plusieurs agents de déshydratation, caractérisé en ce qu'on réalise notamment dans un premier temps un mélange homogène comprenant :
A) de 50 à 80 % en poids d'un ou de plusieurs polymères compatibles thermoplastiques,
B) de 20 à 50 % en poids d'un ou plusieurs agents de déshydratation,
C) de 2 à 8 % en poids d'un ou plusieurs élastomères, et
D) de 1 à 4 % en poids de fibres synthétiques et/ou végétales et/ou animales de longueurs comprises entre 0,5 et 4 mm, puis on transforme la matière obtenue par extrusion.

14. Procédé selon la revendication 13, caractérisé en ce que l'on effectue l'extrusion au moyen d'une extrudeuse à double vis co-rotative.

15. Emballage ou contenant dont la surface intérieure est constituée en matériaux polymères à base des compositions selon l'une des revendications 1 à 12, transformées avec le procédé selon la revendication 13 ou 14.

## Claims

1. Polymer dehydrating compositions of high moisture-absorption capacity, comprising one or more polymers and one or more dehydrating agents, characterised in that they comprise in particular:
A) from SO to 80% by weight of one or more compatible thermoplastic polymers,
B) from 20 to 50% by weight of one or more dehydrating agents,
C) from 2 to 8% by weight of one or more elastomers, and
D) from 1 to 4% by weight of synthetic and/or vegetable and/or animal fibres of lengths being in the range 0,5 to 4 mm,

2. The compositions according to claim 1, characterised in that compatible thermoplastic polymers A) are selected from the group consisting of polystyrenes, polyolefines, polyamides, polyvinyl chlorides or polyurethanes, alone or in combination.

3. The compositions according to claim 1 or 2, characterised in that dehydrating agents B) are selected from the group consisting of silica gels or molecular sieves, alone or in combination.

4. The compositions according to claim 3, characterised in that silica gels are the form of a thin powder.

5. The compositions according to claim 3, characterised in that molecular sieves are in the form of a powder, whose particles have a dimension less than or equal to 20 µm.

6. The compositions according to any one of the preceding claims, characterised in that elastomers C) are selected from the group consisting of styrene-butadiene rubbers, styrene-ethylene-butylene-styrene, butyl rubbers, ethylene-propylene rubbers, ethylene-propylene-diene rubbers, ethylene-vinyl acetate, ethylene-acrylate, acrylonitrile-butadiene copolymers, polynorbornenes, polyisoprenes, polychloroprenes or polybutadienes, alone or in combination.

7. The compositions according to any one of the preceding claims, characterised in that synthetic fibres D) are selected from the group consisting of acrylic, polyester or polyamide fibres, alone or in combination.

8. The compositions according to any one of the preceding claims, characterised in that animal fibres D) are selected from the group consisting of wool or silk fibres, alone or in combination.

9. The compositions according to any one of the preceding claims, characterised in that vegetable fibres D) are selected from the group of cotton or flax fibres, alone or in combination.

10. The compositions according to claim 9, characterised in that cotton fibres have a length less than or equal to 2 mm.

11. The compositions according to any one of the preceding claims, characterised in that they comprise further mineral or organic additives acting as plasticizers or stabilizing agents, dyes, pigments.

12. The compositions according to claim 11, characterised in that they comprise lithopone as dye.

13. A method of preparing a polymer dehydrating materials having high moisture-absorbing capacity, in which a mixture comprising one or more polymers and one or more dehydrating agents is carried out, characterised in that in particular in a first step an homogeneous mixture is carried out comprising:
A) from 50 to 80% by weight of one or more compatible thermoplastic polymers,
B) from 20 to 50% by weight of one or more dehydrating agents,
C) from 2 to 8% by weight of one or more elastomers, and
D) from 1 to 4% by weight of synthetic and/or vegetable and/or animal fibres of lengths being in the range 0,5 to 4 mm.
then the obtained material is transformed by extrusion process.

14. The method according to claim 13, characterised in that the extrusion is performed by means of an extruder with two co-rotating screws.

15. A packaging or container, whose inside surface is constituted by polymer materials based on compositions as defined in claims 1 to 12, transformed via the method as set forth in claim 13 or 14.

## Patentansprüche

1. Entwässernde Polymerzusammensetzungen mit erhöhter Fähigkeit zur Feuchtigkeitsabsorption, ein oder mehrere Polymere und ein oder mehrere Entwässerungsmittel enthaltend, dadurch gekennzeichnet, daß sie insbesondere enthalten:
A) 50 bis 80 Gew.-% eines oder mehrerer kompatibler thermoplastischer Polymere,
B) 20 bis 50 Gew.-% eines oder mehrerer Entwässerungsmittel,
C) 2 bis 8 Gew.-% eines oder mehrerer Elastomere und
D) 1 bis 4 Gew.-% synthetischer und/oder pflanzlicher und/oder tierischer Fasern mit Längen, die zwischen 0,5 und 4 mm liegen.

2. Zusammensetzungen nach Anspruch 1, dadurch gekennzeichnet, daß man die kompatiblen thermoplastischen Polymere A) einzeln oder kombiniert in der Gruppe der Polystyrole, Polyolefine, Polyamide, Polyvinylchloride, Polyurethane wählt.

3. Zusammensetzungen nach Anspruch 1 oder 2, dadurch gekennzeichnet, daß man die Entwässerungsmittel B) einzeln oder kombiniert in der Gruppe der Kieselgele, Molekularsiebe wählt.

4. Zusammensetzungen nach Anspruch 3, dadurch gekennzeichnet, daß die Kieselgele die Form eines feinen Pulvers aufweisen.

5. Zusammensetzungen nach Anspruch 3, dadurch gekennzeichnet, daß die Molekularsiebe die Form eines Pulvers aufweisen, dessen Partikel eine Abmessung kleiner als oder gleich 20 µm haben.

6. Zusammensetzungen nach einem der vorhergehenden Ansprüche, dadurch gekennzeichnet, daß man die Elastomere C) einzeln oder kombiniert in der Gruppe der Styrol-Butadien-Kautschuke, Styrol-Ethylen-Butylen-Styrol-Copolymere, Butyl-Kautschuke, Ethylen-Propylen-Kautschuke, Ethylen-Propylen-Dien-Kautschuke, Ethylen-Vinylacetat-Copolymere, Ethylen-Acrylat-Copolymere, Acrylnitril-Butadien-Copolymere, Polynorbornene, Polyisoprene, Polychloroprene, Polybutadiene wählt.

7. Zusammensetzungen nach einem der vorhergehenden Ansprüche, dadurch gekennzeichnet, daß man die synthetischen Fasern D) einzeln oder kombiniert in der Gruppe der Acrylfasern, Polyesterfasern, Polyamidfasern wählt.

8. Zusammensetzungen nach einem der vorhergehenden Ansprüche, dadurch gekennzeichnet, daß man die tierischen Fasern D) einzeln oder kombiniert in der Gruppe der Wollfasern, Seidenfasern wählt.

9. Zusammensetzungen nach einem der vorhergehenden Ansprüche, dadurch gekennzeichnet, daß man die pflanzlichen Fasern D) einzeln oder kombiniert in der Gruppe der Baumwollfasern, Flachsfasern wählt.

10. Zusammensetzungen nach Anspruch 9, dadurch gekennzeichnet, daß die Baumwollfasern eine Länge kleiner als oder gleich 2 mm haben.

11. Zusammensetzungen nach einem der vorhergehenden Ansprüche, dadurch gekennzeichnet, daß sie darüber hinaus anorganische oder organische Zusätze enthalten, die die Rolle von Weichmachern, Stabilisatoren, Farbstoffen, Pigmenten spielen.

12. Zusammensetzungen nach Anspruch 11, dadurch gekennzeichnet, daß sie als Farbstoff Lithopone enthalten.

13. Verfahren zur Herstellung von entwässernden Polymermaterialien mit erhöhter Fähigkeit zur Feuchtigkeitsabsorption, in welchem man eine Mischung herstellt, die ein oder mehrere Polymere und ein oder mehrere Entwässerungsmittel enthält, dadurch gekennzeichnet, daß man insbesondere zu einem ersten Zeitpunkt eine homogene Mischung herstellt, welche enthält:
A) 50 bis 80 Gew.-% eines oder mehrerer kompatibler thermoplastischer Polymere,
B) 20 bis 50 Gew.-% eines oder mehrerer Entwässerungsmittel,
C) 2 bis 8 Gew.-% eines oder mehrerer Elastomere und
D) 1 bis 4 Gew.-% synthetischer und/oder pflanzlicher und/oder tierischer Fasern mit Längen, die zwischen 0,5 und 4 mm liegen,
und daß man dann das erhaltene Material durch Extrusion verarbeitet.

14. Verfahren nach Anspruch 13, dadurch gekennzeichnet, daß man die Extrusion mit Hilfe eines Extruders mit gleichläufig rotierender Doppelschnecke ausführt.

15. Verpackung oder Behälter, wovon die innere Oberfläche aus Polymermaterialien auf der Grundlage der Zusammensetzungen nach einem der Ansprüche 1 bis 12 besteht, die mit dem Verfahren nach Anspruch 13 oder 14 verarbeitet wurden.
